# EUROPÄISCHE PATENTSCHRIFT

(11) **EP 1 071 838 B1**
(45) Veröffentlichungstag und Bekanntmachung des Hinweises auf die Patenterteilung: **23.10.2002**
(21) Anmeldenummer: 99924663.0
(22) Anmeldetag: 20.03.1999
(51) Int. Cl.: D03C 7/04, H02K 7/14, H02K 21/24

(54) **VORRICHTUNG ZUM BILDEN EINER DREHERKANTE MIT EINEM ELEKTROMOTOR UMFASSEND EINEN ROTOR UND EINEN DEN ROTOR AUFNEHMENDEN STATOR**
DEVICE FOR FORMING A GAUZE EDGE USING A MOTOR COMPRISING A ROTOR AND A STATOR FOR HOUSING SAID ROTOR
DISPOSITIF POUR FORMER UN BORD DE GAZE AU MOYEN D'UN MOTEUR ELECTRIQUE COMPRENANT UN ROTOR AINSI QU'UN STATOR LOGEANT CE DERNIER

(30) Priorität: 25.03.1998 DE 19813082
(43) Veröffentlichungstag der Anmeldung: 31.01.2001
(73) Patentinhaber: Klöcker-Entwicklungs-GmbH, 46325 Borken-Weseke (DE)
(72) Erfinder: HOCKEMEYER, Kurt, D-46325 Borken-Weseke (DE); SCHWEMMLEIN, Christoph, D-46325 Borken-Weseke (DE)
(74) Vertreter: WALTHER, WALTHER & HINZ Patentanwälte
(86) Internationale Anmeldenummer: DE9900823
(87) Internationale Veröffentlichungsnummer: WO99049115

(56) Entgegenhaltungen:
- WO-A-94/19859
- DE-U- 29 713 723
- US-A- 3 700 942
- US-A- 3 869 627
- US-A- 4 330 727

## Beschreibung

Die Erfindung betrifft eine Vorrichtung zum Bilden einer Dreherkante mit einem Elektromotor, umfassend einen Rotor und einen den Rotor aufnehmenden Stator, wobei der Rotor mindestens zwei Führungsöffnungen für die Dreherfäden aufweist, und wobei der Rotor mehrere axial ausgerichtete Magnetpole aufweist.

Aus der EP 674 031 ist ein sogenannter Rotationskantendreher für Webmaschinen bekannt, bei dem ein als Läufer oder Rotor ausgebildeter Ring vorgesehen ist, der in einem entsprechenden als Stator ausgebildeten Gehäuse aufgenommen wird. Dieser Ring, der auch als Scheibe bezeichnet werden kann, besitzt zwei Führungsöffnungen zum Durchführen der Dreherfäden. Der Ring gemäß dem bekannten Stand der Technik zeigt darüber hinaus radial, d. h. auf seinem äußeren Umfang angeordnete Magnete, die mit den entsprechenden in dem Statorgehäuse angeordneten Blechpaketen zusammenarbeiten. Durch Drehung des Rotors im Gehäuse werden die durch den Rotor in den beiden Fadenführungsöffnungen geführten Dreherfäden miteinander verdrillt, wobei durch diese Verdrillung jeweils bei jeder Verdrillung ein Schußfaden abgebunden wird. Die Arbeitsweise einer derartigen Vorrichtung zum Bilden einer Dreherkante ist hinreichend bekannt.

Diese bekannte Vorrichtung zum Bilden einer Dreherkante, die, wie bereits oben beschrieben, als Elektromotor ausgebildet ist, wobei die Magnete für den Elektromotor tangential am Umfang des Rotors angeordnet sind und korrespondierend hierzu der Stator entsprechende Blechpakete aufweist, zeichnet sich durch ein geringes Drehmoment bei jedoch hohem Trägheitsmoment aus. Dies ist insofern von Nachteil, als bei Einsatz dieser Vorrichtung als Vorrichtung zum Bilden einer Volldreherkante die Drehrichtung des Rotors nach einer bestimmten Anzahl Umdrehungen umgekehrt werden muß, um eine Verdrillung der Dreherfäden miteinander auf der Seite der Zuführung der Dreherfäden wieder aufzuheben. Da für eine solche Drehrichtungsumkehr aufgrund der hohen Schußzahl bei modernen Webmaschinen nur eine sehr geringe Zeit zur Verfügung steht, ist es erforderlich, daß der Motor ein überaus hohes Drehmoment bei kleinem Trägheitsmoment besitzt.

Aus dem DE 297 13723.9 ist ein Rotationskantendreher der eingangs genannten Art bekannt, bei dem ein Stator und eine Dreherscheibe vorgesehen sind, wobei die Dreherscheibe auf ihrer einen Seite Magnete aufweist, die auf den Stator zugerichtet sind. Diese Magnete sind auf dem eigentlichen Scheibenkörper aufgebracht. Erkennbar erfolgt der Rückschluß demzufolge zu einer Seite der Scheibe, nämlich zu der Seite, die dem Stator zugewandt ist.

Nachteilig ist hierbei, daß mit dieser bekannten Bauform eines Rotationskantendrehers nur eine geringe Leistungsdichte erzielbar ist.

Aus der US,A,4330737 ist bekannt, dass der Rotor in axialer Richtung zu beiden Seiten durch das Statorgehäuse aufgenommen ist, wobei das Statorgehäuse Eisenkerne mit entsprechenden Wicklungen aufweist. Die Enden der Wicklungen sind allerdings aufeinander zugerichtet. Hieraus ergibt sich, dass, da der Magnetfluss nicht optimal gestaltet ist, der Motor nicht die erforderliche Dynamik und Leistung aufweist, die erforderlich wäre, um diesen für eine Vorrichtung zum Bilden einer Dreherkante einzusetzen.

Aus der US-PS 37 00 942 ist ein Motor bekannt, bei dem der Rotor zu beiden Seiten durch das Statorgehäuse erfasst ist. Der Rotor weist hierbei zwar auch Magnetpole auf, jedoch ist festzustellen, dass die Spule des Statorgehäuses stirnseitig zum Rotor im Statorgehäuse angeordnet ist. Das bedeutet, dass grundsätzlich wie bei der Ausbildung gemäß der DE 297 13 723, die Magnetfeldlinien auf Grund der zu überwindenden Luftspalte einen Streufluss bilden, was eine erhebliche Leistungseinbuße mit sich bringt.

Die Aufgabe, die der Erfindung zugrunde liegt, besteht demzufolge darin, einen Rotationskantendreher der eingangs genannten Art bereitzustellen, der eine hohe Leistungsdichte zeigt, und der eine schnelle Drehrichtungsumkehr erlaubt.

Die Aufgabe wird erfindungsgemäß dadurch gelöst, dass der Rotor zwei in radialer Richtung zueinander beabstandet angeordnete Magnetringe aufweist, wobei die Magnetringe jeweils mehrere Magnetsegmente aufweisen, wobei die Magnetsegmente des einen Magnetringes örtlich versetzt zu denen des anderen Magnetringes angeordnet sind, wobei der Rotor in axialer Richtung zu beiden Seiten durch das Statorgehäuse aufgenommen ist, wobei das Statorgehäuse Eisenkerne mit entsprechenden Wicklungen aufweist, deren Enden auf die Magnetpole des Rotors zugerichtet sind. Die Magnetpole sind somit in Richtung der Drehachse des Rotors ausgerichtet und korrespondierend hierzu erfasst der Stator mit seinen Blechpaketen den Rotor ebenfalls in axialer Richtung zu beiden Seiten. Hieraus wird deutlich, daß der Kraftfluß axial verläuft; hierbei steht die gesamte Oberfläche zu beiden Seiten des Rotors, der beispielsweise als durchgängige Scheibe bzw. als ringförmige Scheibe ausgebildet sein kann, als Magnetfläche zur Verfügung. Eine große Magnetfläche bzw. eine hohe Anzahl von Magnetpolen bewirkt ein hohes Drehmoment, und mithin eine hohe Beschleunigung des Rotors. Ein niedriges Trägheitsmoment ergibt sich daraus, daß die Scheibe zur Aufnahme der Magnetpole überaus dünn ausgebildet sein kann, insbesondere wenn die Scheibe selbst segmentiert magnetisiert und somit kein zusätzliches Gewicht durch auf der Scheibe angeordnete Magnete hinzukommt, wie dies beim Stand der Technik der Fall ist.

Des Weiteren ist auf Folgendes hinzuweisen:
Der Rotor besitzt Öffnungen zur Aufnahme von Dreherfäden. Bedingt durch diese Art der Führung der Dreherfäden in dem Statorgehäuse durch den Rotor wird der magnetische Rückschluss aufgetrennt. Das Statorgehäuse besteht somit aus zwei Teilen oder Hälften. Das heißt, dass der magnetische Widerstand des Rückschlusses erhöht wird, wodurch sich naturgemäß die Leistung des Motors vermindert. Insbesondere dadurch, dass der Rotor in radialer Richtung beabstandet zueinander zwei Magnetpole mit jeweils mehreren Magnetsegmenten aufweist, die zueinander versetzt angeordnet sind, wird nun erreicht, dass durch diese dort geschilderte radiale Anordnung von zwei Magnetringen diese Leistungsminderung durch die Auftrennung des magnetischen Rückschlusses mehr als kompensiert wird.

Nach einem besonderen Merkmal der Erfindung ist der Stator als Gehäuse ausgebildet, das den Rotor zumindest partiell auf dem Umfang umgibt, wobei der Rotor tangential , d. h. auf seinem Umfang im Gehäuse drehbar gelagert ist. Dies kann beispielsweise dadurch erfolgen, daß das Statorgehäuse Kugel- oder Nadellager aufweist, die den Rotor auf seinem Umfang drehbar erfassen. Denkbar ist allerdings auch eine berührungsfreie Lagerung des Rotors beispielsweise durch Luft- oder Magnetlager. Hieraus wird deutlich, daß der Rotor und mithin der Motor im wesentlichen lotrecht an der Webmaschine anbaubar ist, was den Vorteil mit sich bringt, daß dieser aufgrund der kompakten Bauweise in axialer Richtung auch zwischen den Webschäften der Webmaschine angebracht werden kann.

Im Einzelnen besitzt das Statorgehäuse mindestens zwei, vorzugsweise C-förmig ausgebildete Eisenkerne, die den Rotor zu beiden Seiten, d. h. zu beiden Seiten in axialer Richtung des Rotors erfassen. Bekanntermaßen besteht zwischen Rotor und Stator ein Luftspalt; dieser Luftspalt ist konstruktionsbedingt bei jedem Elektromotor vorhanden; er dient im vorliegenden Fall allerdings auch dazu, die Dreherfäden an dem Rotor während der Drehung des Rotors vorbeizuführen. Hieraus folgt, daß durch die oben beschriebene erfindungsgemäße Konstruktion eines Elektromotors die Möglichkeit eröffnet wird, den Rotor ohne eine im Gehäuse gelagerte Mittelachse zu lagern. Die drehbare Lagerung des Rotors durch eine solche Mittelachse ist insofern nicht denkbar, da sich dann bei Drehung des Rotors die Dreherfäden um diese Mittelachse schlingen würden. Das heißt, die erfindungsgemäße Konstruktion verwirklicht zwei Vorteile:
1. es wird die Möglichkeit der Lagerung des Rotors im Stator eröffnet, ohne daß der Weg der Dreherfäden von der einen Seite des Rotors zur anderen Seite des Rotors behindert ist;
2. ein solcher Motor weist konstruktionsbedingt ein geringes Trägheitsmoment bei hohem Drehmoment auf, was eine hohe Beschleunigungsrate in Bezug auf eine Drehrichtungsumkehr ermöglicht.

Dadurch, daß der Rotor auf seiner Oberfläche eine Vielzahl von Magnetpolen aufweist, besteht die Möglichkeit der überaus präzisen Positionierung auch im Mikroschritt-Betrieb, was insofern von Vorteil ist, als hierdurch das Einrichten der Vorrichtung insgesamt an der Webmaschine in Hinblick auf die Einstellung des Fachöffnungswinkels erleichtert wird.

Eine besondere Ausführungsform zeichnet sich durch zwei Rotoren aus, um zwei Gewebekanten parallel herstellen zu können, also z.B. eine Abfallkante und eine Dreherkante. Hierzu ist zwischen den beiden Statorhälften des Stators ein Eisenrückschluß in Form einer Scheibe angeordnet, wobei zu jeder Seite des Eisenrückschlusses ein Rotor vorgesehen ist. Die Rotoren sind aufgrund der getrennten Magnetkreise unterschiedlich ansteuerbar.

Vorteilhaft sind die Motoren bestehend aus Rotor und Stator als Schrittmotoren ausgebildet. Im Gegensatz zu Servomotoren ist der regelungstechnische Aufwand bei Schrittmotoren wesentlich geringer, weil die ständige Lageüberwachung des Rotors und die entsprechende regelungstechnische Korrektur der Rotorlage entfällt. Ein Schrittmotor benötigt demzufolge keine Regelung, sondern lediglich eine Steuerung. Sollte es beim Schrittmotor zu nichtsynchronen Betriebszuständen kommen, so lassen sich diese durch einen einzelnen Impuls korrigieren, der einmal pro Umdrehung ausgelöst wird und dessen Auftreten zum richtigen Zeitpunkt abgeprüft wird.

Weitere vorteilhafte Ausgestaltungen der Erfindung ergeben sich aus den Unteransprüchen.

Anhand der Zeichnungen wird die Erfindung nachstehend beispielhaft erläutert.
- Fig. 1: zeigt die Vorrichtung in einer Seitenansicht, wobei das Vorderteil des Gehäuses weggelassen wurde;
- Fig. 2: zeigt einen Schnitt gemäß der Linie II - II aus Figur 1;
- Fig. 3: zeigt schematisch eine weitere Ausführungsform einer Dreherscheibe mit zwei Magnetringen;
- Fig. 4: zeigt schematisch eine Statorhälfte für eine Dreherscheibe gemäß Figur 3;
- Fig. 5: zeigt schematisch die Anordnung von Stator und Dreherscheibe gemäß Fig. 3 und Fig. 4.
- Fig. 6 und 7: zeigen eine Ausführungsform mit einem zweigeteilten Stator, wobei die eine Statorhälfte lediglich einen Eisenrückschluß aufweist, wie dies aus der Schnittdarstellung gemäß Fig. 7 erkennbar ist.
- Fig. 8 und 9: zeigen eine weitere Ausführungsform mit zwei Statorhälften, und zwei Rotoren, wobei zwischen den Rotoren ein Eisenrückschluß in Form einer Scheibe angeordnet ist.

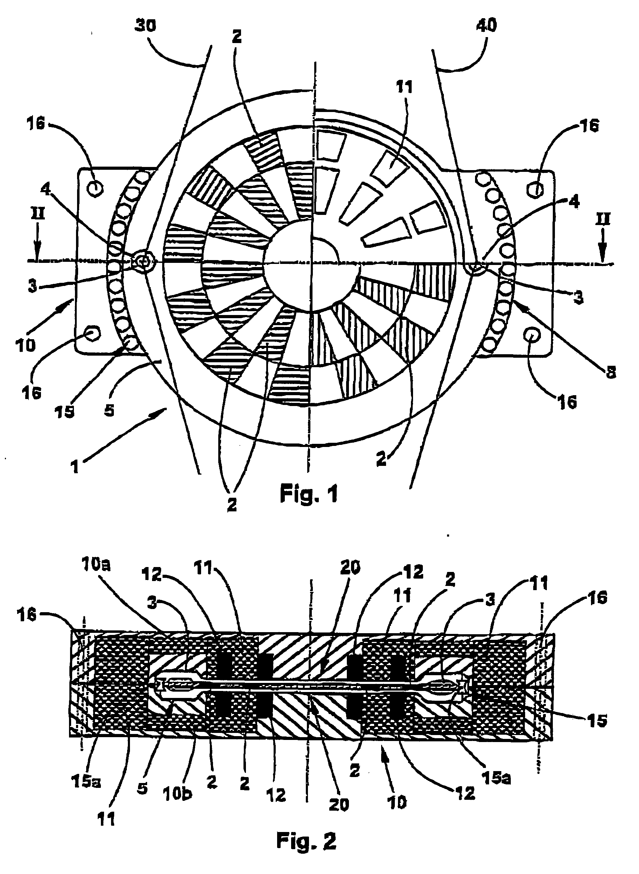

Gemäß den Figuren 1 und 2 ist der Rotor mit 1 und das den Rotor aufnehmende Statorgehäuse mit 10 bezeichnet. Der Rotor 1 besitzt auf seiner Oberfläche, und zwar zu beiden Seiten des Rotors Magnete 2, wobei die Polung der Magnete 2 zu beiden Seiten des Rotors entgegengesetzt ist. Das heißt, daß der Magnet, der zu einer Seite der Oberfläche hin als Nordpol ausgebildet ist, auf der anderen, gegenüberliegenden Seite des Rotors als Südpol ausgebildet ist. Die Anordnung der Magnete 2 auf dem Rotor ist derart, daß sich zwei kreisförmige Anordnungen von Magneten ergeben. Der Rotor selbst besitzt darüber hinaus radial einen nicht mit Magneten bestückten Kranzbereich 5, der die beiden Öffnungen 3 zur Durchführung der Dreherfäden aufweist. Diese Öffnungen 3 können zur Verschleißminderung mit Keramikeinsätzen 4 versehen sein.

Aufgenommen ist der Rotor 1 durch das Statorgehäuse 10. Das insgesamt mit 10 bezeichnete Statorgehäuse besitzt C-förmige Eisenkerne 11 mit entsprechenden Wicklungen 12, deren Enden auf die Magnete des Rotors zugerichtet sind. Zwischen Rotor und Gehäuse bzw. Rotor und Eisenkern befindet sich ein Luftspalt 20, in dem die Dreherfäden 30, 40 geführt werden. Das Gehäuse 10, das die beiden Statorhälften 10a, 10b zeigt, weist darüber hinaus auf den Umfang des Rotors 1 zuweisend ein Wälzlager 15 auf, das der Lagerung des Rotors im Statorgehäuse oder Stator dient. Hieraus wird deutlich, daß der Rotor auf seinem tangentialen Umfang durch das Wälzlager im Gehäuse gelagert ist. Die Lagerung in axialer Richtung kann durch eine teilbare Form der Wälzkörper 15 a und eine entsprechende nach außen gewölbte Ausbildung des Rotors 1 erfolgen. Durch die Schrauben 16 werden die beiden Teile 10a, 10b des Stators 10 zusammengehalten; die Breite 18 des Statorgehäuses ist derart gewählt, daß durch den Stator bzw. durch das Statorgehäuse der Rotor formschlüssig erfaßbar ist.

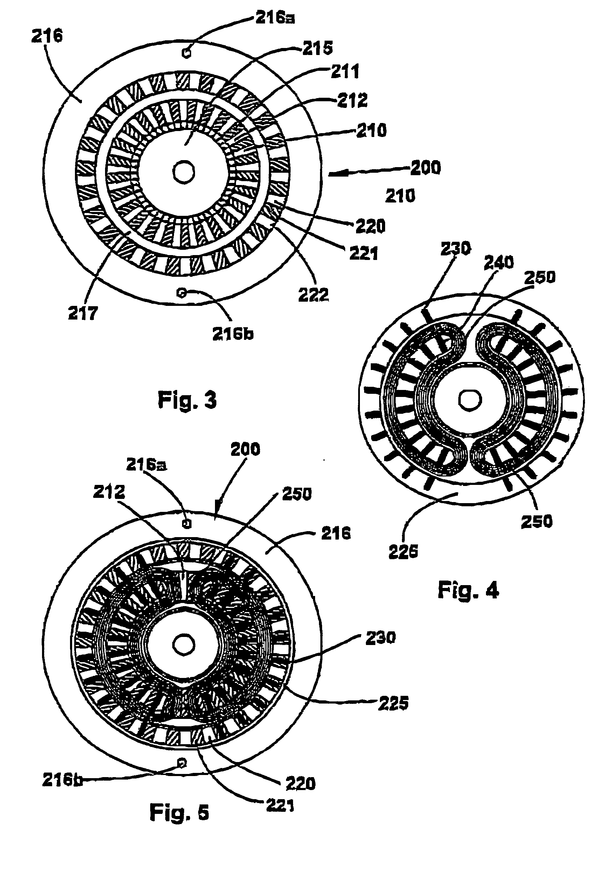

Die Ausführungsform gemäß Figur 3 bis 5 ist lediglich schematisch dargestellt. Die Lagerung der Dreherscheibe bei diesen beiden schematischen Darstellungen ist weggelassen. Sie erfolgt jedoch, ähnlich der Ausgestaltung gemäß Figur 1 und 2, tangential auf dem Umfang der Scheibe, beispielsweise durch Rollen- oder Kugellager. Das Statorgehäuse ist hierbei mit 225 bezeichnet.

Bei der Ausführungsform gemäß den Figuren 3 bis 5 ist eine Dreherscheibe bzw. Rotor 200 vorgesehen, die zwei in radialer Richtung beabstandet zueinander angeordnete, scheibenartige Magnetringe 210 und 220 zeigt, wobei die Magnetringe jeweils mehrere Magnetsegmente 211, 212 bzw. 221, 222 zeigen. Die Anordnung der Magnetsegmente 211, 212 bzw. 221, 222 ist hierbei derart, daß diese versetzt zueinander angeordnet sind. D.h., daß die Magnetsegmente in den einzelnen Ringen jeweils eine unterschiedliche Polung in dem benachbarten Segment aufweisen, und auch zu denen des benachbarten Ringes versetzt sind. Auch diese Dreherscheibe 200 zeigt eine Trägerscheibe 215 und einen Führungsring 216, zwischen denen die beiden scheibenförmigen Magnetringe 210, 220 angeordnet sind. Die beiden Magnetringe 210, 220 sind hierbei durch einen Abstandsring 217 beabstandet gehalten. Sowohl die Trägerscheibe 215 als auch der Führungsring 216 mit den beiden Führungsöffnungen 216 a bzw. 216 b für die Dreherfäden und auch der Abstandsring 217 sind hierbei aus nicht leitendem Material hergestellt.

Die Ausführung des Stators ,bestehend wiederum aus zwei Gehäusehälften 225, ergibt sich aus Figur 4; hierbei sind die Eisenkerne 230, 240 fluchtend hintereinander angeordnet, was gewisse Vorteile hinsichtlich der Fertigung mit sich bringt. Die Wicklung ist in Figur 4 mit 250 bezeichnet.

Bei der Ausführungsform gemäß den Figuren 3 bis 5 kann zur Herstellung einer derartigen Dreherscheibe vorgesehen sein, daß die Dreherscheibe zur Verbindung der einzelnen Elemente, nämlich der Trägerscheibe, der Magnetringe und des Führungsringes und gegebenenfalls, wie in Figur 3 dargestellt, des Abstandsringes 217 magnetische und vorteilhaft auch elektrisch nicht leitende Folien aufweist. Mit solchen Folien werden diese Elemente, die die eigentliche Dreherscheibe bilden, zu beiden Seiten beklebt um hierdurch einer solchen Scheibe die für die Funktion erforderliche Stabilität und Steifigkeit zu vermitteln.

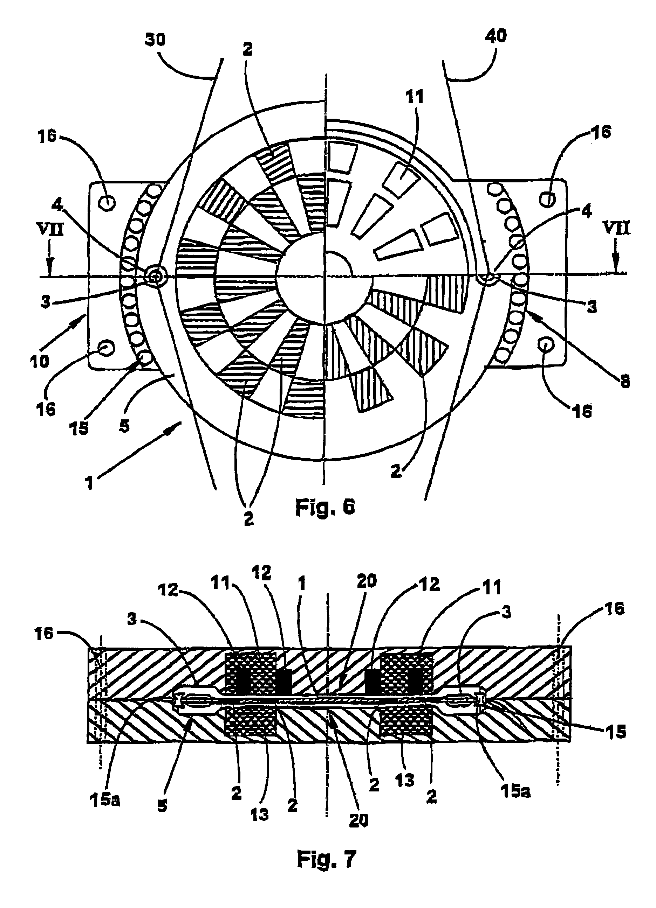

Bei der Ausführungsform gemäß der Figur 6 und 7 ist ein zweiteiliges Statorgehäuse 10 vorgesehen, wobei zwischen den beiden Statorgehäuseteilen 10a, 10b der Rotor 1 angeordnet ist. Die Lagerung des Rotors 1 erfolgt ganz ähnlich der Ausführungsform gemäß Figur 1 und 2. Im Unterschied zu der Ausführungsform gemäß den Figuren 1 und 2, bei der der Stator 10 Eisenkerne bzw. Eisenjoche mit zu beiden Seiten des Rotors angeordneten entsprechenden Wicklungen aufweist, zeigt die eine Statorhälfte 10 b bei der Ausführungsform gemäß den Figuren 6 und 7 lediglich einen Eisenrückschluß 13 ohne Wicklung, d.h. diese Statorhälfte ist passiv ausgebildet. Diese Variante ist etwas preiswerter als eine Ausführungsform mit zwei aktiven Statorhälften, jedoch ist auch die Leistung etwas geringer.

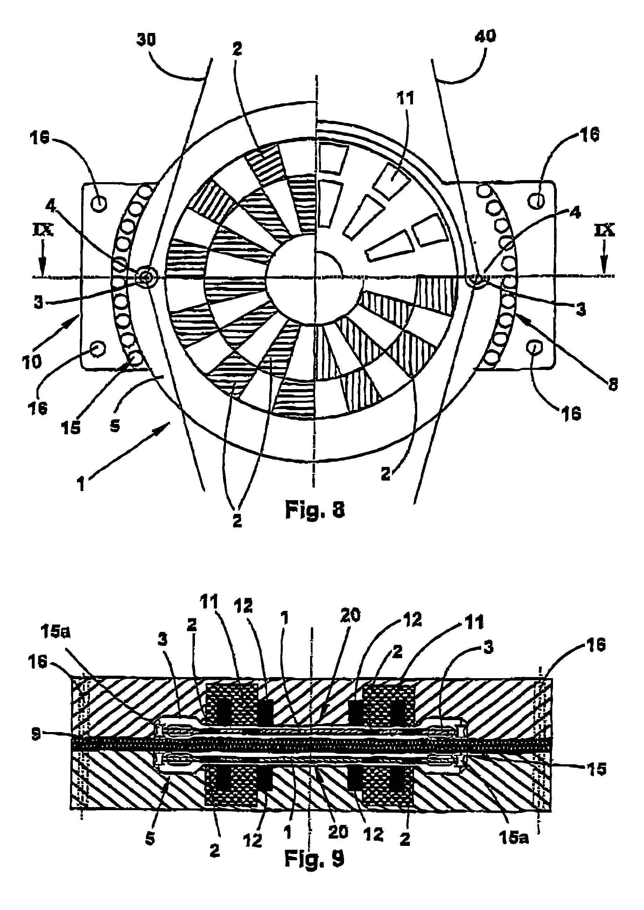

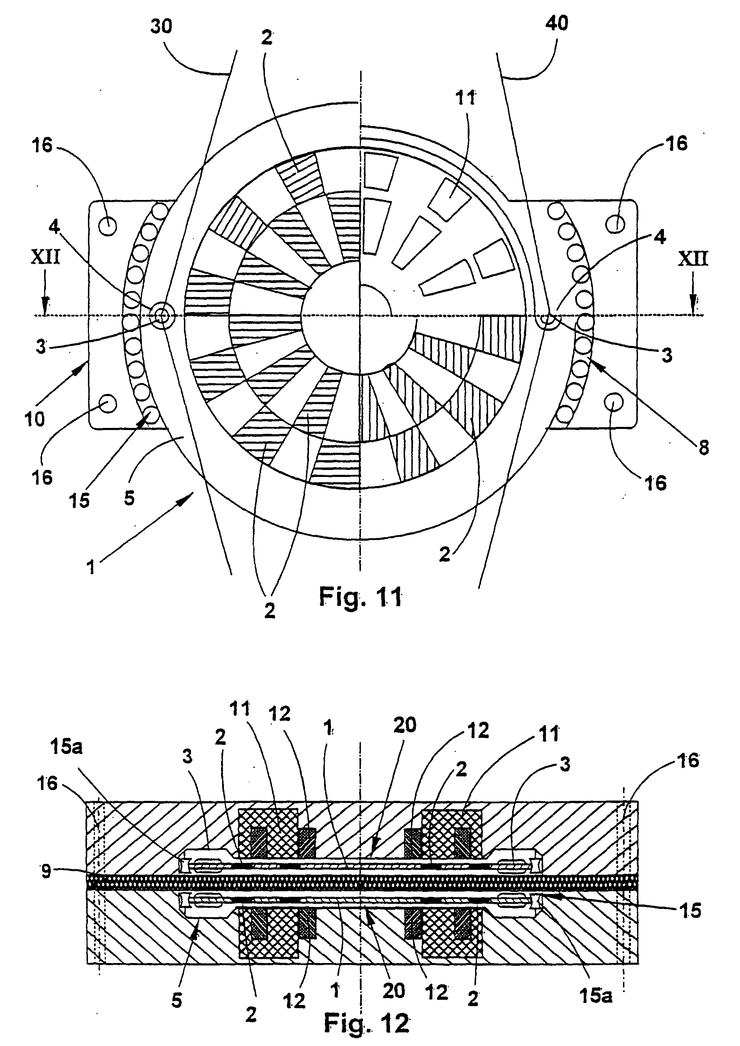

Die Ausführungsform gemäß Figur 8 und 9 zeichnet sich durch zwei Rotoren 1 aus, deren Ausbildung ähnlich der in Figur 1 und Figur 2 ist, weshalb an dieser Stelle hierauf verwiesen wird. Diese beiden Rotoren befinden sich zwischen den beiden Statorhälften 10 a, 10 b, wobei zwischen den beiden Rotoren 1 ein Eisenrückschluß 9 in Form einer Scheibe vorgesehen ist. Diese Scheibe ist unbeweglich in dem Stator 10 angeordnet. Die Statorhälften zeigen jeweils Eisenkerne 11 mit den Wicklungen 12. Es entstehen hierbei zwei getrennte Magnetkreise, so daß die Rotoren unabhängig voneinander antreibbar sind. Die Lagerung der Rotoren 1 erfolgt auch hier durch Wälzlager 15. Durch zwei voneinander unabhängige Rotoren können zwei Gewebekanten hergestellt werden, wobei eine dieser Kanten als Abfallkante dienen kann. In Bezug auf die übrigen Merkmale der Ausführungsformen gemäß den Fig. 6 bis 9 wird auf die Ausführungen zu den Fig. 1 und 2 verwiesen.

Es wird darauf hingewiesen, dass der Rückschluss aus magnetisch leitfähigem Material bestehen muss. Üblicherweise stellt sich der Rückschluss als Eisenkern mit mehreren Blechpaketen dar.

## Patentansprüche

1. Vorrichtung zum Bilden einer Dreherkante mit einem Elektromotor, umfassend einen Rotor (1) und ein den Rotor aufnehmendes Statorgehäuse (10), wobei der Rotor mindestens zwei Führungsöffnungen (3) für die Dreherfäden aufweist, wobei der Rotor (1) mehrere axial ausgerichtete Magnetpole aufweist,
**dadurch gekennzeichnet,**
**dass** der Rotor (1) zwei in radialer Richtung beabstandet zueinander angeordnete Magnetringe (210, 220) aufweist, wobei die Magnetringe (210, 220) jeweils mehrere Magnetsegmente (211, 212; 221, 222) aufweisen, wobei die Magnetsegmente (211, 212) des einen Magnetringes (210) örtlich versetzt zu denen des anderen Magnetringes (220) angeordnet sind, wobei der Rotor (1) in axialer Richtung zu beiden Seiten durch das Statorgehäuse (10) aufgenommen ist, wobei das Statorgehäuse (10) Eisenkerne (11) mit entsprechenden Wicklungen (12) aufweist, deren Enden auf die Magnetpole des Rotors zugerichtet sind.

2. Vorrichtung nach. Anspruch 1,
**dadurch gekennzeichnet,**
**daß** der Rotor (1) als Scheibe ausgebildet ist.

3. Vorrichtung nach Anspruch 1,
**dadurch gekennzeichnet,**
**daß** der Rotor (1) als kreisförmige Scheibe (1, 100, 200) ausgebildet ist.

4. Vorrichtung nach Anspruch 1,
**dadurch gekennzeichnet,**
**daß** die Eisenkerne (11) C-förmig ausgebildet den Rotor (1) zu beiden Seiten axial erfassen.

5. Vorrichtung nach einem der voranstehenden Ansprüche,
**dadurch gekennzeichnet,**
**daß** das Statorgehäuse (10) den Rotor (1) auf seinem Umfang um insgesamt mehr als 180 ° umfaßt, so daß der Rotor (1) formschlüssig erfaßbar ist.

6. Vorrichtung nach einem der voranstehenden Ansprüche,
**dadurch gekennzeichnet,**
**daß** in axialer Richtung zwischen Statorgehäuse (10) und Rotor (1) ein Luftspalt (20) vorgesehen ist.

7. Vorrichtung nach einem der voranstehenden Ansprüche,
**dadurch gekennzeichnet,**
**daß** der Rotor (1) in seiner Drehrichtung umsteuerbar ist.

8. Vorrichtung nach einem der voranstehenden Ansprüche,
**dadurch gekennzeichnet,**
**daß** das Gehäuse (10) und damit der Rotor (1) im wesentlichen lotrecht an der Webmaschine anbringbar ist.

9. Vorrichtung nach einem der voranstehenden Ansprüche,
**dadurch gekennzeichnet,**
**daß** die Lagerung des Rotors (1) berührungsios im Statorgehäuse (10) ausgebildet ist.

10. Vorrichtung nach einem der voranstehenden Ansprüche,
**dadurch gekennzeichnet,**
**daß** die Magnetringe (210, 220) scheibenartig ausgebildet sind.

11. Vorrichtung nach einem der voranstehenden Ansprüche,
**dadurch gekennzeichnet,**
**daß** die jeweils benachbarten Magnetsegmente (211,212; 221, 222) der beiden Magnetringe (210, 220) eine entgegengesetzte Polung aufweisen.

12. Vorrichtung. nach einem der voranstehenden Ansprüche,
**dadurch gekennzeichnet,**
**daß** die kreisförmige, den Rotor des Motors bildende Scheibe (200) eine Trägerscheibe (215) aus nicht magnetischem Material aufweist, an die sich in radialer Richtung der erste Magnetring (210) anschließt, wobei sich an diesen Magnetring (210) in ebenfalls radialer Richtung ein Abstandsring (217) aus nicht magnetischem Material anschließt, an den sich wiederum der weitere Magnetring (220) in radialer Richtung anschließt, der von einem Führungsring (216) umschlossen wird, wobei der Führungsring (216) die Öffnungen (216a, 216b) für die Dreherfäden aufweist.

13. Vorrichtung nach einem der voranstehenden Ansprüche,
**dadurch gekennzeichnet,**
**daß** die im Stator (225) angeordneten Eisenkeme (230, 240), die mit der Wicklung (250) des Stators in Verbindung stehen, in der Draufsicht auf den Stator gesehen, fluchtend hintereinander liegen.

14. Vorrichtung nach einem der voranstehenden Ansprüche,
**dadurch gekennzeichnet,**
**daß** die kreisförmige Scheibe (100) einen scheibenförmigen Magnetring (110) mit Magnetsegmenten (111, 112) aufweist.

15. Vorrichtung nach einem der vorangegangenen Ansprüche,
**dadurch gekennzeichnet,**
**daß** die im Stator (125) angeordneten Eisenkerne, die mit der Wicklung (250) des Stators (125) in Verbindung stehen, in der Draufsicht auf den Stator (125) gesehen, seitlich versetzt zueinander angeordnet sind.

16. Vorrichtung nach einem der voranstehenden Ansprüche,
**dadurch gekennzeichnet,**
**daß** die kreisförmige Scheibe (100, 200) zur Erhöhung der Stabilität beidseitig eine magnetisch nicht leitfähige Folie aufweist.

17. Vorrichtung nach einem der voranstehenden Ansprüche,
**dadurch gekennzeichnet,**
**daß** die Folie auf die einzelnen, die Scheibe (100, 200) bildenden, Elemente aufgeklebt ist

18. Vorrichtung nach einem der voranstehenden Ansprüche,
**dadurch gekennzeichnet,**
**daß** der Stator (10, 125, 225) aus zwei Teilen besteht, zwischen denen der Rotor (1, 100, 200) angeordnet ist.

19. Vorrichtung nach Anspruch 18,
**dadurch gekennzeichnet,**
**daß** zwischen zwei Statorhälften (10a, 10b) des Stators (10 ) ein Eisenrückschluß (9) vorgesehen ist, wobei zwischen jeweils einer Statorhälfte (10a, 10b) und dem Eisenrückschluß (9) jeweils ein Rotor (1) vorgesehen ist.

## Claims

1. Device for forming a leno selvedge with an electric motor comprising a rotor (1) and a stator casing (10) accommodating the rotor, whereas the rotor is provided with at least two guiding apertures (3) for the doup ends and whereas the rotor (1) is provided with several magnetic poles oriented in axial direction,
**characterized in that**
the rotor (1) is provided with two spaced magnetic rings (210, 220) arranged in radial direction, the magnetic rings (210, 220) being provided with several magnet segments (211, 212; 221, 222) each, the magnet segments (211, 212) of the one magnetic ring (210) being locally offset relative to those of the other magnetic ring (210, 220), whereas the rotor (1) is received on both sides in axial direction by the stator casing (10), whereas the stator casing (10) is provided with iron cores (11) with appropriate windings (12), the ends of which being oriented toward the magnetic poles of the rotor.

2. Device according to claim 1,
**characterized in that**
the rotor (1) is designed as a disc.

3. Device according to claim 1,
**characterized in that**
the rotor (1) is designed as a circular disc (1, 100, 200).

4. Device according to claim 1,
**characterized in that**
the C-shaped iron cores (11) axially lock the rotor (1) on both sides.

5. Device according to one of the afore mentioned claims,
**characterized in that**
the stator casing (10) encompasses the rotor (1) on its periphery by more than 180° so that the rotor (1) may be locked positively.

6. Device according to one of the afore mentioned claims,
**characterized in that**
an air gap (20) is provided in axial direction between the stator casing (10) and the rotor (1).

7. Device according to one of the afore mentioned claims,
**characterized in that**
the direction of rotation of the rotor (1) is reversible.

8. Device according to one of the afore mentioned claims,
**characterized in that**
the casing (10) and hence the rotor (1) may be mounted at right angles on the power-operated loom.

9. Device according to one of the afore mentioned claims,
**characterized in that**
the rotor (1) is carried without contact on bearings in the stator casing (10).

10. Device according to one of the afore mentioned claims,
**characterized in that**
the magnetic rings (210, 220) are designed as discs.

11. Device according to one of the afore mentioned claims,
**characterized in that**
the neighbouring magnet segments (211, 212; 221, 222) of the two magnetic rings (210, 220) have an opposite polarization.

12. Device according to one of the afore mentioned claims,
**characterized in that**
the circular disc (200) constituting the rotor of the motor is provided with a supporting disc (215) made of non magnetic material, followed in radial direction by the first magnetic ring (210), said first magnetic ring (210) being followed in radial direction as well by a spacer ring (217) made of non magnetic material, followed itself in radial direction by the other magnetic ring (220), which is encompassed by a guiding ring (216), the guiding ring (216) being provided with the apertures. (216a, 216b) for the doup ends.

13. Device according to one of the afore mentioned claims,
**characterized in that**
the iron cores (230, 240), which are arranged in the stator(225) and communicate with the winding (250) of the stator, are aligned one behind the other in a top view consideration on the stator.

14. Device according to one of the afore mentioned claims,
**characterized in that**
the circular disc (100) is provided with a disc-shaped magnetic ring (110) with magnet segments (111, 112).

15. Device according to one of the afore mentioned claims,
**characterized in that**
the iron cores, which are arranged in the stator (125) and communicate with the winding (250) of the stator (125), are laterally offset relative to each other in a top view consideration on the stator (125).

16. Device according to one of the afore mentioned claims,
**characterized in that**
the circular disc (100, 200) is provided on both sides with a magnetically nonconducting foil to the purpose of increasing its stability.

17. Device according to one of the afore mentioned claims,
**characterized in that**
the foil is glued onto the different elements constituting the disc (100, 200).

18. Device according to one of the afore mentioned claims,
**characterized in that**
the stator (10, 125, 225) is composed of two parts, the rotor (1, 100, 200) being accommodated between the two of them.

19. Device according to claim 18,
**characterized in that**
a ferromagnetic circuit (9) is provided between two halves (10a, 10b) of the stator (10), one rotor (1) being provided between each of the stator halves (10a, 10b) and the ferromagnetic circuit (9).

## Revendications

1. Dispositif pour la formation d'une lisière au point de gaze munie d'un moteur électrique comprenant un rotor (1) et une carcasse statorique (10) recevant ledit rotor, ledit rotor étant pourvu d'au moins deux trous de guidage (3) pour les fils de tour ainsi que de plusieurs pôles magnétiques d'orientation axiale,
**caractérisé en ce que**
le rotor (1) est pourvu de deux anneaux magnétiques (210, 220) disposés avec un écartement entre eux en direction radiale, lesdits anneaux magnétiques (210, 220) étant pourvus chacun de plusieurs segments magnétiques (211, 212; 221, 222), les segments magnétiques (211, 212) de l'un des anneaux magnétiques (210) étant décalés par rapport à ceux de l'autre anneau magnétique (210, 220), le rotor (1) étant reçu sur ses deux faces par la carcasse statorique (10), ladite carcasse (10) étant pourvue de noyaux de fer (11) avec des enroulements (12) appropriés dont les extrémités sont pointées vers les pôles magnétiques du rotor.

2. Dispositif selon la revendication 1,
**caractérisé en ce que**
le rotor (1) est réalisé sous forme de disque.

3. Dispositif selon la revendication 1,
**caractérisé en ce que**
le rotor (1) est réalisé sous forme de disque circulaire (1, 100, 200).

4. Dispositif selon la revendication 1,
**caractérisé en ce que**
les noyaux de fer (11) en forme de C saisissent le rotor (1) de manière axiale sur ses deux faces.

5. Dispositif selon l'une des revendications précédentes,
**caractérisé en ce que**
la carcasse statorique (10) entoure le rotor (1) sur son pourtour sur plus de 180° de manière à ce que le rotor (1) est relié au stator par une liaison rigide.

6. Dispositif selon l'une des revendications précédentes,
**caractérisé en ce que**
un entrefer (20) est prévu en direction axiale entre la carcasse statorique (10) et le rotor (1).

7. Dispositif selon l'une des revendications précédentes,
**caractérisé en ce que**
la direction de rotation du rotor (1) peut être inversée.

8. Dispositif selon l'une des revendications précédentes,
**caractérisé en ce que**
la carcasse (10) et donc le rotor (1) peuvent être montés sur la machine à tisser de manière à être sensiblement perpendiculairement à celle-ci.

9. Dispositif selon l'une des revendications précédentes,
**caractérisé en ce que**
le rotor (1) est maintenu dans la carcasse statorique (10) par sustentation.

10. Dispositif selon l'une des revendications précédentes,
**caractérisé en ce que**
les anneaux magnétiques (210, 220) sont réalisés sous forme de disque.

11. Dispositif selon l'une des revendications précédentes,
**caractérisé en ce que**
les segments magnétiques voisins (211, 212; 221, 222) des deux anneaux magnétiques (210, 220) ont une polarité contraire.

12. Dispositif selon l'une des revendications précédentes,
**caractérisé en ce que**
le disque (200) circulaire constituant le rotor du moteur est pourvu d'un disque de support (215) réalisé en un matériau non magnétique auquel fait suite, en direction radiale, le premier anneau magnétique (210), ledit anneau magnétique (210) étant suivi, toujours en direction radiale, d'une pièce d'écartement (217) en forme d'anneau et réalisée en un matériau non magnétique à laquelle fait suite, en direction radiale, le deuxième anneau magnétique (220) qui est entouré d'un anneau de guidage (216), ledit anneau de guidage (216) étant pourvu des trous (216a, 216b) pour les fils de tour.

13. Dispositif selon l'une des revendications précédentes,
**caractérisé en ce que**,
dans une vue d'en haut sur le stator, les noyaux de fer (230, 240), qui sont disposés dans le stator (225) et communiquent avec l'enroulement (250) du stator, sont alignés les uns derrière les autres.

14. Dispositif selon l'une des revendications précédentes,
**caractérisé en ce que**
le disque circulaire (100) est pourvu d'un anneau magnétique en forme de disque (110) ayant des segments magnétiques (111, 112).

15. Dispositif selon l'une des revendications précédentes,
**caractérisé en ce que**,
dans une vue d'en haut sur le stator (125), les noyaux de fer, qui sont disposés dans le stator (125) et communiquent avec l'enroulement (250) du stator (125), sont décalés latéralement les uns par rapport aux autres.

16. Dispositif selon l'une des revendications précédentes,
**caractérisé en ce que**
le disque circulaire (100, 200) est pourvu, sur ses deux faces, d'une feuille n'ayant pas de propriétés de conductivité magnétique en vue d'augmenter la stabilité.

17. Dispositif selon l'une des revendications précédentes,
**caractérisé en ce que**
la feuille est collée sur les différents éléments constituant le disque (100, 200).

18. Dispositif selon l'une des revendications précédentes,
**caractérisé en ce que**
le stator (10, 125, 225) est constitué de deux parties entre lesquelles est disposé le rotor (1, 100, 200).

19. Dispositif selon la revendication 18,
**caractérisé en ce que**
un circuit ferromagnétique (9) est prévu entre deux moitiés (10a, 10b) du stator (10), un rotor (1) étant prévu entre chacune des moitiés du stator (10a, 10b) et le circuit ferromagnétique (9).
